# EUROPEAN PATENT SPECIFICATION

(11) **EP 3 023 647 B1**
(45) Date of publication and mention of the grant of the patent: **08.07.2020**
(21) Application number: 14306859.1
(22) Date of filing: 24.11.2014
(51) Int. Cl.: F15B 13/043

(54) **Servovalve jet pipe**
Servoventilstrahlrohr
Tuyau à jet servodistributeur

(43) Date of publication of application: 25.05.2016
(73) Proprietor: Goodrich Actuation Systems SAS, 95310 Saint-Ouen-l'Aumone (FR)
(72) Inventor: Ras, Mikael, 78530 BUC (FR); De La Chevasnerie, Arnaud, 92410 VILLE-D'AVRAY (FR)
(74) Representative: Dehns

(56) References cited:
- DE-A1- 3 737 143
- US-A- 3 282 283
- US-A- 3 473 547
- US-A- 4 591 317

## Description

The present disclosure generally relates to a jet pipe for a servovalve, and more particularly to a hydraulic servovalve incorporating a jet pipe. The hydraulic servovalve may be for use in an actuator, for example in an aircraft.

### BACKGROUND

A hydraulic servovalve is a type of valve that incorporates a servomechanism, or servo, to control the porting or distribution of hydraulic fluid. A hydraulic servovalve typically includes one or more moveable spools, movement of which is controlled by applying a variable pressure to a fluid either side of the spool. The variable pressure may be applied to the fluid using an electro-hydraulic system involving an electromagnet. That is, an electromagnet may be used to control the pressure of a fluid either side of the moveable spool of the servovalve.

An actuator can be controlled using a hydraulic servovalve. The actuator may include an actuator spool that is itself controlled by applying a variable pressure to a fluid either side of the actuator spool. Movement of the actuator spool may drive a component.

An advantage of using an electro-hydraulic servovalve to control the actuator is that a relatively low power electrical signal can be used to drive a relatively high power actuator. In this regard, the servovalve can be seen as a hydraulic amplifier, in which a relatively low pressure fluid is used to control a low power component, i.e. the servo, which in turn controls movement of a relatively high pressure fluid to control a high power component, i.e. the actuator.

A type of electro-hydraulic servovalve uses a jet pipe to control the pressure of a fluid either side of the servovalve spool. Such jet pipes conventionally comprise at least two parts, including a pipe and jet nozzle. A brazing process is typically used to assemble these two parts. Such a method requires a highly accurate process to provide the required position of the nozzle and ensure sealing. US 4 591 317 A discloses a known jet pipe, which is of a two-piece construction with an upper, flexible part made of material such as stainless steel and a tip made of hardened steel for erosion resistance and has an opening at its lower end defining a nozzle.

DE 3737143 A1 discloses a prior art arrangement having the features of the preamble of claim 1, and US 3282283 discloses a hydraulic regulating system and apparatus.

What is needed is an improved jet pipe for use in an electro-hydraulic servovalve.

### SUMMARY

In accordance with an aspect of the present invention, there is provided a jet pipe for a hydraulic servovalve, as claimed in claim 1.

The body may comprise a cavity, the cavity forming the fluid inlet, fluid outlet and conduit.

The cavity may have a first diameter at the fluid inlet and a second diameter at the fluid outlet, and the second diameter may be smaller than the first diameter.

The second diameter may be less than 26%, 17% or 10% of the first diameter.

The diameter of the cavity may not increase between the fluid inlet and the fluid outlet.

The cavity may taper towards the fluid outlet along a portion of the body. The portion of the body may be hardened relative to a remainder of the body. The hardened portion of the body may comprise less than 10 mm, 5 mm, 2 mm or 1 mm of the length of the nozzle.

The body may further comprise one or more protrusions or supports extending therefrom, the protrusions or supports having a connecting portion for connecting to a component, for example a feedback device or external force input device.

The body may comprise a first support for connecting to a first component, and a second support for connecting to a second component. The first and/or second component may be a feedback device or external force input device. The first support and the second support may be located at substantially the same longitudinal position along the length of the body.

In accordance with an aspect of the present disclosure, there is provided a jet pipe assembly comprising a jet pipe as described above, wherein the jet pipe is connected to one or more further components, for example a feedback device and/or external force input device. The external force input device may be a mechanical input device configured to assist or add to torque that may be applied to the jet pipe in use, for example from a torque motor. The feedback device may be a feedback or torsion spring configured to oppose or balance torque that may be applied to the jet pipe in use, for example from a torque motor or the external force input device.

The external force to the external force input device may be provided by an electric motor, or other force generator.

In accordance with an aspect of the present disclosure, there is provided a hydraulic servovalve comprising a jet pipe as claimed in any preceding claim.

The hydraulic servovalve may further comprise a torque motor, the torque motor comprising an electromagnet assembly having an armature, wherein the jet pipe is coupled to the armature such that, in use, the jet pipe moves with the armature.

In accordance with an aspect of the present invention, there is provided a method of manufacturing a jet pipe for a hydraulic servovalve as claimed in claim 13.

Various embodiments will now be described, by way of example only, and with reference to the accompanying drawings in which:
Fig. 1 shows an electro-hydraulic servovalve in accordance with the disclosure;
Fig. 2 shows a jet pipe in accordance with the disclosure;
Fig. 3 shows a jet pipe in accordance with the disclosure; and
Figs. 4A and 4B show a further jet pipe in accordance with the disclosure.

### DETAILED DESCRIPTION

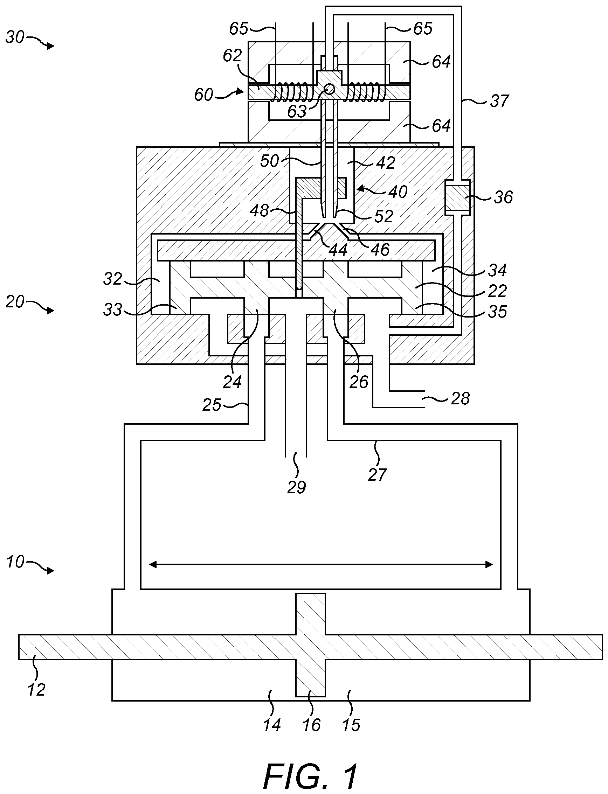

Fig. 1 shows an electro-hydraulic servovalve in accordance with the disclosure.

An actuator 10 comprises a moveable spool or piston rod 12 that drives a component, for example an aircraft component such as a primary flight control component, for example an aileron, rudder or elevator. Movement of the actuator piston rod 12 is controlled by a hydraulic fluid that is ported into a first pressure chamber 14 and a second pressure chamber 15. The piston rod 12 includes a piston 16 that separates the first pressure chamber 14 from the second pressure chamber 15. The volumes of the first and second pressure chambers 14, 15 vary with movement of the piston 16.

Supply of hydraulic fluid into the first and second pressure chambers 14, 15 is controlled using a servovalve 20. A servo spool 22 is moveable to control the porting of hydraulic fluid into the first pressure chamber 14 and the second pressure chamber 15.

The servovalve 20 is connected to the first pressure chamber 14 via a first hydraulic fluid line 25, and to the second pressure chamber 15 via a second hydraulic fluid line 27. The servo spool 22 comprises a first stopper 24 that is configured to stop hydraulic fluid from entering the first hydraulic fluid line 25 when the servo spool 22 is at its central, or null position, as well as a second stopper 26 configured to stop hydraulic fluid from entering the second hydraulic fluid line 27 when the servo spool 22 is at its central, or null position,.

A supply line 28 supplies hydraulic fluid under a relatively high pressure into the system, including to regions adjacent to the first stopper 24 and second stopper 26. A return line 29 receives hydraulic fluid from the system at a relatively low pressure.

Upon movement of the servo spool 22 in the right direction shown in Fig. 1, the first stopper 24 will move right and expose the first hydraulic fluid line 25 to the supply line 28. At the same time, the second stopper 26 will also move to the right and expose the second hydraulic fluid line 27 to the return line 29. As such, the first pressure chamber 14 is exposed to the higher, supply pressure and the second pressure chamber 15 is exposed to the lower, return pressure. This creates a pressure differential across the piston 16, which in turn moves to the right as shown in Fig. 1.

Movement of the servo spool 22 is controlled by an electro-hydraulic torque motor or hydraulic amplifier 30. The servo spool 22 is controlled in a similar manner to the actuator spool 12. The torque motor comprises a left pressure chamber 32 and left piston 33, as well as a right pressure chamber 34 and a right piston 35. Hydraulic fluid is supplied to the left pressure chamber 32 and right pressure chamber 34, and applies a pressure to the left piston 33 and the right piston 35 respectively.

In the central, or null position the servo spool 22 does not move, since the pressure of hydraulic fluid in the left pressure chamber 32 is equal to the pressure of hydraulic fluid in the right pressure chamber 34.

A differential pressure system 40 is provided to control the pressure of hydraulic fluid in the left pressure chamber 32 and the right pressure chamber 34. The differential pressure system 40 comprises a jet pipe 50 having a nozzle 52 positioned adjacent to a left inlet 44 and a right inlet 46. The left inlet 44 is in fluid communication with the left pressure chamber 32 and the right inlet 46 is in fluid communication with the right pressure chamber 34.

The jet pipe 50 directs a stream of fluid into a chamber 42. The fluid is sourced from the supply line 28 via a filter 36 and a conduit 37, and is returned via an outlet (not shown). The fluid travels through the jet pipe 50 and is expelled through its nozzle 52. The jet pipe 50 is rotatable such that the nozzle 52 can be selectively directed towards the left inlet 44 or the right inlet 46.

Rotation of the jet pipe 50 is caused by an electromagnet 60 having a rotatable armature 62. The jet pipe 50 is connected to the armature 62 at its central, pivot point 63. Two or more permanent magnets (not shown) fix the distance between two pole pieces 64 and the armature 62. The pole pieces 64 lie above and below the armature 62, and wire coils 65 surround the armature either side of the central point 63. Application of an electric current to the wire coils 65 causes the armature 62 to rotate, in turn causing the jet pipe 50 to rotate. The polarity of the electic current determines whether the jet pipe 50 rotates left or right.

In its central, or null position, fluid from the jet pipe 50 impinges on a point directly between the left inlet 44 and the right inlet 46. In this situation, the pressure at the left inlet 44 and right inlet 46 is the same, since the fluid flowing past the inlets 44, 46 has the same pressure.

Upon rotation of the jet pipe 50, the nozzle 52 will move towards one of the inlets 44, 46. In this case the pressure is increased at the inlet that the nozzle 52 is moving towards, and decreased at the inlet that the nozzle 52 is moving from.

For example, if the jet pipe 50 is rotated to the left in Fig. 1, the pressure of fluid at the left inlet 44 increases and the pressure of fluid at the right inlet 46 decreases. This reduces the fluid pressure in the right pressure chamber 34 and increases the fluid pressure in the left pressure chamber 32. In this situation the pressure on the left piston 33 is higher than the pressure on the right piston 35, and the servo spool 22 will move to the right. At this point supply fluid will flow into the first hydraulic fluid line 25 and actuate the actuator as described above.

A feedback spring 48 may be connected to the jet pipe 50, and provides a force that urges the jet pipe 50 towards its central, or null position. The magnitude of the force is inversely proportional to the distance that the servo spool 22 is from its central, or null position.

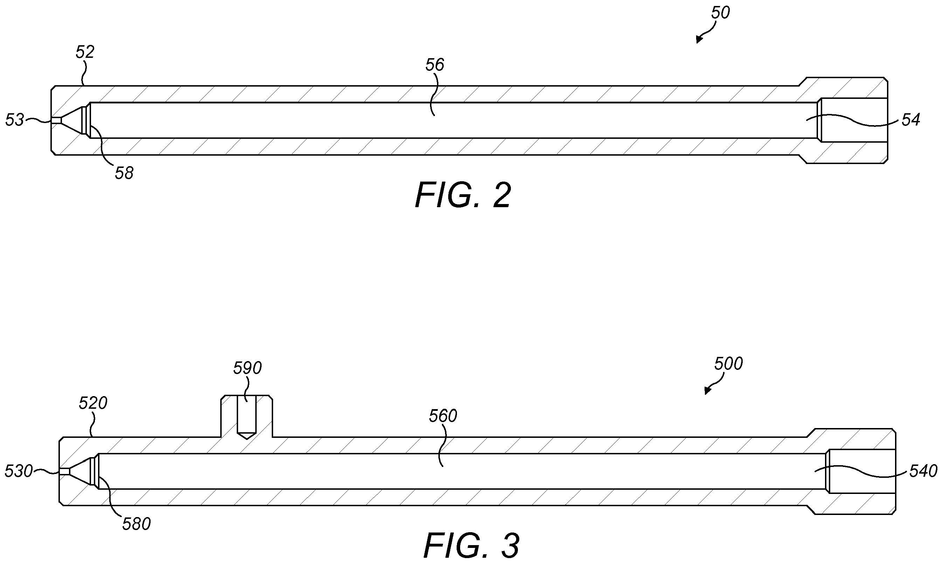

Fig. 2 shows a jet pipe 50 in accordance with the present disclosure.

The jet pipe 50 comprises a body, for example a cylindrical tube, that is made from one piece of material.

In order to form the jet pipe 50, a workpiece, for example a martensitic stainless steel workpiece, is machined such that it forms a cylindrical tube having a rear end 54 connectable to another component, for example the armature 62 described herein. In the illustrated example, the rear end 54 comprises a fluid inlet. The jet pipe 50 may be formed from other materials, however. The nozzle 52 of the jet pipe 50 is opposite to the rear end 54 and comprises a fluid outlet in the form of a jet hole 53 for expelling fluid. The jet hole 53 may be in an end face of the nozzle 52.

A conduit or cavity 56 is machined into the workpiece, which forms the conduit for a fluid, e.g. hydraulic fluid, to travel through as described herein. A reduced diameter, or tapered portion 58 may be machined into the nozzle 52 of the jet pipe 50 adjacent to the jet hole 53. The reduced diameter portion 58 may taper from the initial diameter of the cavity 56 to the diameter of the jet hole 53, so as to minimise the turbulence of fluid flowing into the jet hole. The tapered portion 58 may also help to minimise cavitation that may occur due to such turbulence, and the acceleration of fluid as it travels from the relatively large diameter cavity 56 to the relatively small diameter jet hole 53.

Due to the increased speed of the fluid through the jet pipe in the nozzle 52, this end of the jet pipe 50 is hardened by, for example, quenching or induction (heat) treatment. This hardens the nozzle 52 and may help prevent erosion damage. The hardened portion of the nozzle may be less than 5 mm of the length of the nozzle, and optionally less than 2 mm.

The jet pipe 50 may be joined to a component, such as the armature 62 described herein, by a brazing or welding process, for example.

Fig. 3 shows another jet pipe 500 according to the disclosure.

The jet pipe 500 in this embodiment has an optional support 590 for attachment to a component, for example a feedback device or an external force input device. The feedback device may comprise a feedback spring 48 as described herein, and the external force input device may be a mechanical input device for causing a mechanical input displacement. The component may be attached to the support 590 via a threaded attachment, friction fit or weld joint, for example.

The jet pipe 500, including the support 590, is made from a single piece of material. This may further reduce the requirement for additional components of the jet pipe 500. The remaining portions of the jet pipe 500 of this embodiment, including the nozzle 520, jet hole 530, rear end 540 and tapered portion 580, have the same or similar features to those corresponding to the jet pipe 50 described above.

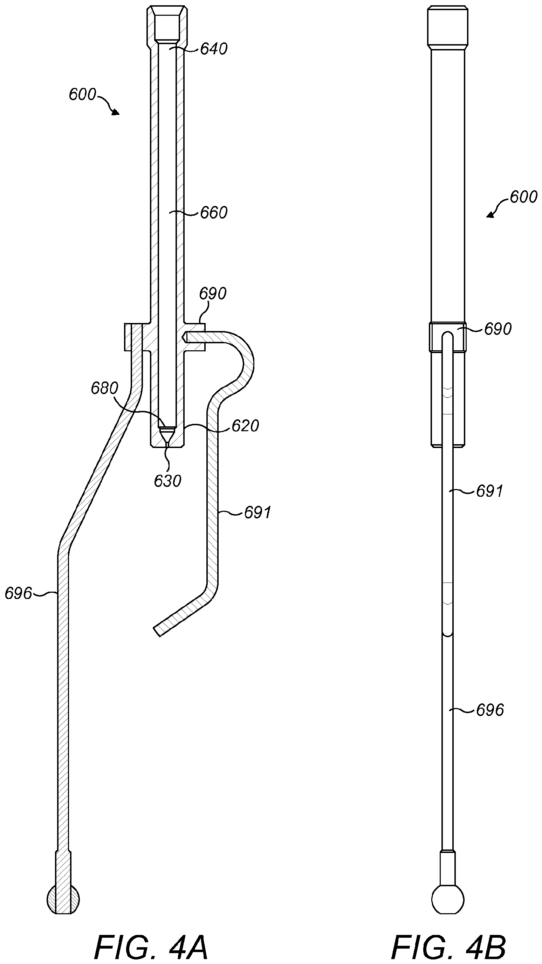

Figs. 4A and 4B show a further jet pipe 600 according to the disclosure.

The jet pipe 600 in this embodiment comprises a first optional support 690 for attachment to a first component, and a second optional support 695 for attachment to a second component. The first or second component may be a feedback device, for example a feedback spring 691, or an external force input device, for example a mechanical input displacement. The first and second components may be attached to the support 590 via a threaded attachment, friction fit or weld joint, for example.

The jet pipe 600, including the first support 690 and second support 695, is made from a single piece of material. This may further reduce the requirement for additional components of the jet pipe 600. The remaining portions of the jet pipe 600 of this embodiment, including the nozzle 620, jet hole 630, rear end 640 and tapered portion 680, have the same or similar features to those corresponding to the jet pipe 50 described above.

As discussed above, the feedback device, for example feedback spring, displacement generates a torque proportional to its deflection to oppose or balance the torque from the torque motor.

The external force input device, for example a mechanical input device, can be used to generate a torque proportional to its deflection which may support or add to the torque from the torque motor, which is generated by the electric current applied to the electromagnet. The sum of the torque from the torque motor and the external force input device may be opposed or balanced by a feedback device, if present. If, for example, the torque motor receives no current, the external force input device may create a torque to displace the jet pipe by itself to ensure its movement.

Although the present disclosure has been described with reference to the embodiments described above, it will be understood by those skilled in the art that various changes in form and detail may be made without departing from the scope of the accompanying claims.

## Claims

1. A jet pipe (50; 500; 600) for a hydraulic servovalve (20), comprising:
a body comprising a fluid inlet, a fluid outlet and a conduit (56) in fluid communication with the fluid inlet and the fluid outlet;
wherein said body is a single piece of material; **characterised in that**:
said fluid outlet is located at an end of said body, and said end is hardened relative to a remainder of said body.

2. A jet pipe as claimed in claim 1, wherein said jet pipe (50; 500; 600) is a single piece of material.

3. A jet pipe as claimed in claim 1 or 2, wherein said body comprises a cavity, said cavity forming said fluid inlet, fluid outlet and conduit (56).

4. A jet pipe as claimed in claim 3, wherein said cavity has a first diameter at said fluid inlet and a second diameter at said fluid outlet, and said second diameter is smaller than said first diameter.

5. A jet pipe as claimed in claim 4, wherein said second diameter is less than 30% of said first diameter.

6. A jet pipe as claimed in claim 3, 4 or 5, wherein the diameter of said cavity does not increase between said fluid inlet and said fluid outlet.

7. A jet pipe as claimed in any of claims 3 to 6, wherein said cavity tapers towards said fluid outlet along a portion (58) of said body.

8. A jet pipe as claimed in claim 7, wherein said portion (58) of said body is hardened relative to a remainder of said body.

9. A jet pipe as claimed in claim 7 or 8, wherein said hardened portion (58) of said body comprises less than 5 mm of the length of the nozzle.

10. A jet pipe as claimed in any preceding claim, wherein said body further comprises one or more protrusions or supports (590; 690, 695) extending therefrom, said protrusions or supports (590; 690, 695) having a connecting portion for connecting to a component, for example a torsion spring (691) or mechanical input device (696).

11. A hydraulic servovalve (20) comprising a jet pipe (50; 500; 600) as claimed in any preceding claim.

12. A hydraulic servovalve as claimed in claim 11, further comprising a torque motor (30), said torque motor (30) comprising an electromagnet assembly (60, 62) having an armature (62), wherein said jet pipe (50; 500; 600) is coupled to said armature (62) such that, in use, said jet pipe (50; 500; 600) moves with said armature (62).

13. A method of manufacturing a jet pipe (50; 500; 600) for a hydraulic servovalve, comprising:
providing a workpiece;
machining said workpiece to form a body comprising a fluid inlet, a fluid outlet and a conduit (56) in fluid communication with the fluid inlet and the fluid outlet, wherein said body is a single piece of material; **characterised by**
applying a hardening treatment to an end of said body comprising said fluid outlet, such that said end is hardened relative to a remainder of said body.

## Patentansprüche

1. Strahlrohr (50; 500; 600) für ein hydraulisches Servoventil (20), umfassend:
einen Körper, der einen Fluideinlass, einen Fluidauslass und eine Leitung (56) in Fluidkommunikation mit dem Fluideinlass und dem Fluidauslass umfasst;
wobei der Körper ein einziges Materialstück ist; **dadurch gekennzeichnet, dass**:
sich der Fluidauslass an einem Ende des Körpers befindet und das Ende bezogen auf einen Rest des Körpers gehärtet ist.

2. Strahlrohr nach Anspruch 1, wobei das Strahlrohr (50; 500; 600) ein einziges Materialstück ist.

3. Strahlrohr nach Anspruch 1 oder 2, wobei der Körper einen Hohlraum umfasst, wobei der Hohlraum den Fluideinlass, den Fluidauslass und die Leitung (56) bildet.

4. Strahlrohr nach Anspruch 3, wobei der Hohlraum einen ersten Durchmesser an dem Fluideinlass und einen zweiten Durchmesser an dem Fluidauslass aufweist und der zweite Durchmesser kleiner ist als der erste Durchmesser.

5. Strahlrohr nach Anspruch 4, wobei der zweite Durchmesser weniger als 30 % von dem ersten Durchmesser ist.

6. Strahlrohr nach Anspruch 3, 4 oder 5, wobei der Durchmesser des Hohlraums zwischen dem Fluideinlass und dem Fluidauslass nicht zunimmt.

7. Strahlrohr nach einem der Ansprüche 3 bis 6, wobei sich der Hohlraum entlang eines Abschnitts (58) des Körpers in Richtung des Fluidauslasses verjüngt.

8. Strahlrohr nach Anspruch 7, wobei der Abschnitt (58) des Körpers bezogen auf einen Rest des Körpers gehärtet ist.

9. Strahlrohr nach Anspruch 7 oder 8, wobei der gehärtete Abschnitt (58) des Körpers weniger als 5 mm der Länge der Düse umfasst.

10. Strahlrohr nach einem der vorangehenden Ansprüche, wobei der Körper ferner einen Vorsprung oder mehrere Vorsprünge oder eine Stütze oder mehrere Stützen (590; 690, 695) umfasst, die sich davon erstrecken, wobei die Vorsprünge oder Stützen (590; 690, 695) einen Verbindungsabschnitt zum Verbinden einer Komponente aufweisen, zum Beispiel einer Torsionsfeder (691) oder einer mechanischen Eingabevorrichtung (696).

11. Hydraulisches Servoventil (20), umfassend ein Strahlrohr (50; 500; 600) nach einem der vorangehenden Ansprüche.

12. Hydraulisches Servoventil nach Anspruch 11, ferner umfassend einen Drehmomentmotor (30), wobei der Drehmomentmotor (30) eine elektromagnetische Baugruppe (60, 62) umfasst, die eine Armatur (62) aufweist, wobei das Strahlrohr (50; 500; 600) derart an die Armatur (62) gekoppelt ist, dass sich das Strahlrohr (50; 500; 600) im Gebrauch mit der Armatur (62) bewegt.

13. Verfahren zum Herstellen eines Strahlrohrs (50; 500; 600) für ein hydraulisches Servoventil, umfassend:
Bereitstellen eines Werkstücks;
Bearbeiten des Werkstücks, um einen Körper zu bilden, der einen Fluideinlass, einen Fluidauslass und eine Leitung (56) in Fluidkommunikation mit dem Fluideinlass und dem Fluidauslass umfasst, wobei der Körper ein einziges Materialstück ist; **gekennzeichnet durch**:
Anwenden einer Härtungsbehandlung auf ein Ende des Körpers, das den Fluidauslass umfasst, sodass das Ende bezogen auf einen Rest des Körpers gehärtet ist.

## Revendications

1. Tuyau à jet (50 ; 500 ; 600) pour un servodistributeur hydraulique (20), comprenant :
un corps comprenant une entrée de fluide, une sortie de fluide et un conduit (56) en communication fluidique avec l'entrée de fluide et la sortie de fluide ;
dans lequel ledit corps est une seule pièce de matériau ;
**caractérisé en ce que** :
ladite sortie de fluide est située à une extrémité dudit corps, et ladite extrémité est durcie par rapport à un reste dudit corps.

2. Tuyau à jet selon la revendication 1, dans lequel ledit tuyau à jet (50 ; 500 ; 600) est une seule pièce de matériau.

3. Tuyau à jet selon la revendication 1 ou 2, dans lequel ledit corps comprend une cavité, ladite cavité formant lesdits entrée de fluide, sortie de fluide et conduit (56).

4. Tuyau à jet selon la revendication 3, dans lequel ladite cavité a un premier diamètre au niveau de ladite entrée de fluide et un second diamètre au niveau de ladite sortie de fluide, et ledit second diamètre est inférieur audit premier diamètre.

5. Tuyau à jet selon la revendication 4, dans lequel ledit second diamètre est inférieur à 30 % dudit premier diamètre.

6. Tuyau à jet selon la revendication 3, 4 ou 5, dans lequel le diamètre de ladite cavité n'augmente pas entre ladite entrée de fluide et ladite sortie de fluide.

7. Tuyau à jet selon l'une quelconque des revendications 3 à 6, dans lequel ladite cavité s'effile vers ladite sortie de fluide le long d'une partie (58) dudit corps.

8. Tuyau à jet selon la revendication 7, dans lequel ladite partie (58) dudit corps est durcie par rapport à un reste dudit corps.

9. Tuyau à jet selon la revendication 7 ou 8, dans lequel ladite partie durcie (58) dudit corps comprend moins de 5 mm de la longueur de la buse.

10. Tuyau à jet selon une quelconque revendication précédente, dans lequel ledit corps comprend en outre une ou plusieurs saillies ou un ou plusieurs supports (590 ; 690, 695) s'étendant à partir de celui-ci, lesdites saillies ou lesdits supports (590 ; 690, 695) ayant une partie de raccordement pour se raccorder à un composant, par exemple un ressort de torsion (691) ou un dispositif d'entrée mécanique (696).

11. Servodistributeur hydraulique (20) comprenant un tuyau à jet (50 ; 500 ; 600) selon une quelconque revendication précédente.

12. Servodistributeur hydraulique selon la revendication 11, comprenant en outre un moteur couple (30), ledit moteur couple (30) comprenant un ensemble électro-aimant (60, 62) ayant une armature (62), dans lequel ledit tuyau à jet (50 ; 500 ; 600) est couplé à ladite armature (62) de sorte que, en cours d'utilisation, ledit tuyau à jet (50 ; 500 ; 600) se déplace avec ladite armature (62).

13. Procédé de fabrication d'un tuyau à jet (50 ; 500 ; 600) d'un servodistributeur hydraulique, comprenant :
la fourniture d'une pièce à travailler ;
l'usinage de ladite pièce à travailler pour former un corps comprenant une entrée de fluide, une sortie de fluide et un conduit (56) en communication fluidique avec l'entrée de fluide et la sortie de fluide, dans lequel ledit corps est une seule pièce de matériau ; **caractérisé par**
l'application d'un traitement durcissant à une extrémité dudit corps comprenant ladite sortie de fluide, de sorte que ladite extrémité est durcie par rapport à un reste dudit corps.
